# EUROPEAN PATENT APPLICATION

(11) **EP 2 808 836 A1**
(43) Date of publication of application: **03.12.2014**
(21) Application number: 14169981.9
(22) Date of filing: 27.05.2014
(51) Int. Cl.: G06Q 10/10, G06Q 30/02

(54) **The device and the method for sending personalised messages**

(30) Priority: 30.05.2013 PL 40414813
(71) Applicant: Piotrowska, Agnieszka Magdalena, 05-082 Lachtorzew (PL)
(72) Inventor: Piotrowska, Agnieszka Magdalena, 05-082 Lachtorzew (PL)
(74) Representative: Markieta, Jaroslaw Franciszek

(57) **Abstract**

The method for sending personalised messages, characterised by comprising steps in which a carrier is tagged, then a personalised message is saved on a server and attributed to the tagged carrier, next the personalised message is sent from the server in response to and in accordance with attribution to the tagged carrier.

## Description

The object of the invention is the device and the method for sending personalised messages

According to the invention, the object and the method find application in the field of communication. They facilitate sending e.g. digital content to people having an unknown telephone number or staying in different time zones.

In current state of the art, there are commonly known methods for sending messages by postcards or systems of voicemail used to leave messages.

The method for sending personalised messages is characterised by comprising steps in which a carrier is tagged, then a personalised message is saved on a server and attributed to the tagged carrier, next the personalised message is sent from the server in response to and in accordance with attribution to the tagged carrier.

According to the invention, the method is characterised in that the carrier is a postcard, a computer file or another material object.

According to the invention, the method is characterised in that the tag is a QR code or a unique pair of a login and a code, or an alphanumeric code.

According to the invention, the method is characterised in that the personalised message is a voice message, an audio record, a video record, an image, text or metadata.

The device for sending personalised messages is characterised in that it is equipped with means for receiving and saving personalised messages, a module for assigning the tagged carrier to the personalised message and a module for sending the personalised method from the server in response to and in accordance with attribution to the tagged carrier.

The method for sending personalised messages is characterised in that the personalised messages are sent to the server, the access mode to the personalised messages are configured in response to the enquiry, the personalised messages are sent in the access mode.

Moreover, according to the invention, the method is characterised in that after sending the personalised message in the access mode, the next personalised message or messages being a reply to the initiating personal message is/are saved, and then the personalised messages saved in the access mode can be reproduced.

According to the invention, the method is characterised in that the personalised message is a voice message, an audio record, a video record, an image, text or metadata.

According to the invention, the method is characterised in that the access mode includes an unlimited number of recipients, includes a limited number of recipients, in particular one recipient, a determined message expiry date, a determined number of replies.

The device for sending personalised messages is characterised in that it contains a module for receiving and saving personalised messages on the sever, a module for configuring the access mode and a module for classifying and reproducing the replies to personalised messages in the access mode.

The object of the invention has been clearly presented in the favourable example of embodiment in the picture, in which:
- Fig. 1: presents a system according to the invention in the first example of embodiment;
- Fig. 2: presents a system according to the invention in the second example of embodiment;
- Fig. 3: presents a system according to the invention in the third example of embodiment.

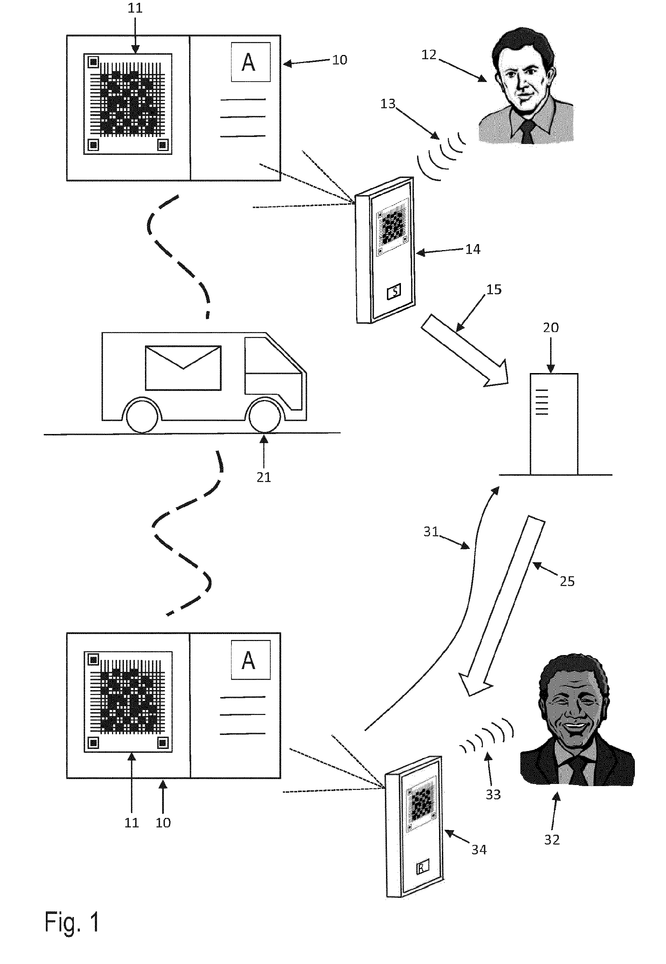

Fig. 1 depicts a system of sending the personal message to a person whose telephone number is unknown, but whose address of residence is known. In particular, the system finds application in passing the content of personal, emotional character, which are not eagerly expressed by users in real time. A postcard 10 is a carrier of identification tagging. In the presented example, the tag is a QR code 11, however, it may also be a pair of a login and a password or a unique alphanumerical code. A user 12 would like to send a voice message 13 to a recipient 32, initiates a process by taking a photo of the tag 11 e.g. a QR code or by entering a pair of a login or a password or an alphanumerical code on the keyboard and records a personalised message, in this case a voice message. Yet, you should bear in mind that a personalised message may comprise any digital content, an image, a film or even text data. The recording device, e.g. a smartphone, a tablet, a portable computer, sends the recorded personalised message together with the identification tagging to the server 20 of the intermediary centre. Whereas, the user sends the tagged carrier via a different communication channel e.g. by the post office 21. The carrier may be passed personally, by a currier or in the form of mms o by electronic mail.

The recipient of the carrier enters the identification tagging 11, in this case a QR code, on a receiving device, sends the tag to the intermediary centre, where the personalised message 25, identical to the message 15 sent before by the sender 12, is sent from the server 20 to the device 24. The receiving device 34 reproduces the personalised message to the recipient 32.

Alternatively, a tagging carrier does not have to have a unique QR code, i.e. postcards do not have to be individualised by the service operator, QR codes may be replaced with a unique (recognised by the intermediary centre's system) pair of a login and a password. Such a solutions reduces costs of operating the system, because the user writes down data identifying the message which is saved in the intermediary centre on a standard postcard. After receiving the postcard, the recipient enters the login and/or the password in the application and gains access to the recording. This solution, in particular, enables sending wishes with sender's own voice attached to a traditional postcard tagged with a QR code.

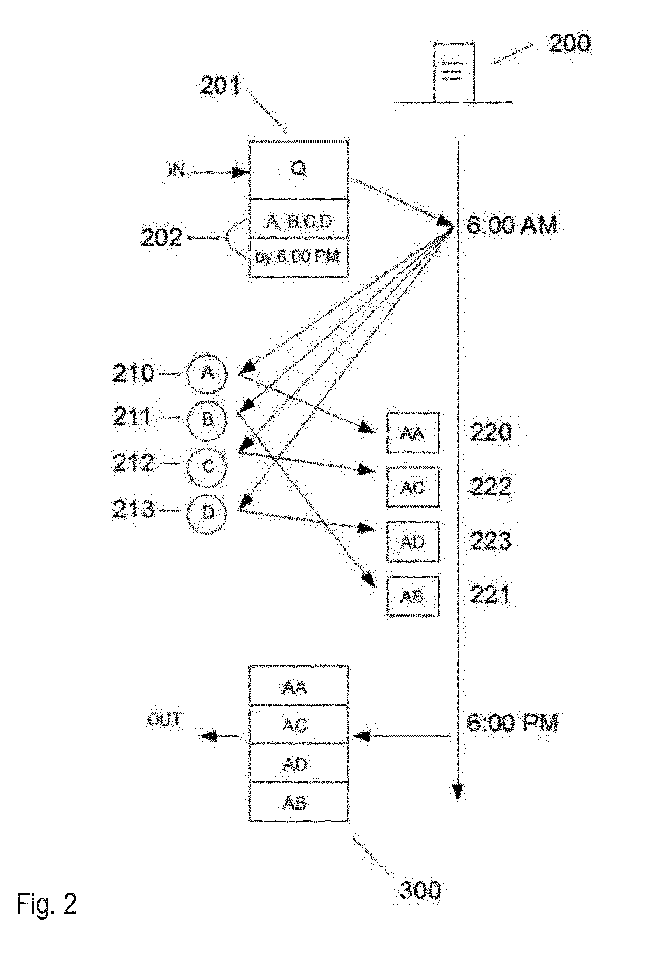

The second example of embodiment of the device presented in fig. 2 shows the system using the intermediary centre for storing and distributing micro voice messages, so-called ucasts. In the presented example of embodiment, the input message 201 is entered in the server 200 of the intermediary centre at 6 am. The message is accompanied by data 202 defining access mode. In the presented example, the access mode defines four recipients A, B, C, D and the time of session closure at 6 pm.

As shown, ucast distribution mode may comprise distribution to a determined group of recipients, to a determined, single recipient as well as an unidentified group of recipients, in the last case, we have ucast 201, which is a publically available message. Message access mode can define any parameters configuring the method of access, e.g. a number of recipients, a geographical area, an operational system of the recipient's device, etc.

The ucast message prepared in this way is sent to the server 200 of the intermediary centre. The system of the intermediary centre spreads information about the ucast 201 in the message access mode - either sending the message 201 together with the information in the access mode or enabling the recipients to download the message from the server 200 in accordance with access mode parameters and its own time capabilities, or in convenient circumstances.

Depending on the ucast 201 content, recipients A, B, C, D can, due to circumstances, sent replies 220, 221, 222, 223 to the server 200. A communication session is processed in accordance with parameters specified while sending ucast 201 to the server 200. In the presented example of embodiment, the session gets closed at 6 pm and an original author of the ucast 201 receives collected replies from recipients A, B, C, D 300 within a planned operation of reading session results.

According to the second example of embodiment, the system proves to work particularly well in case of communication in dispersed systems between various, frequently remote time zones.

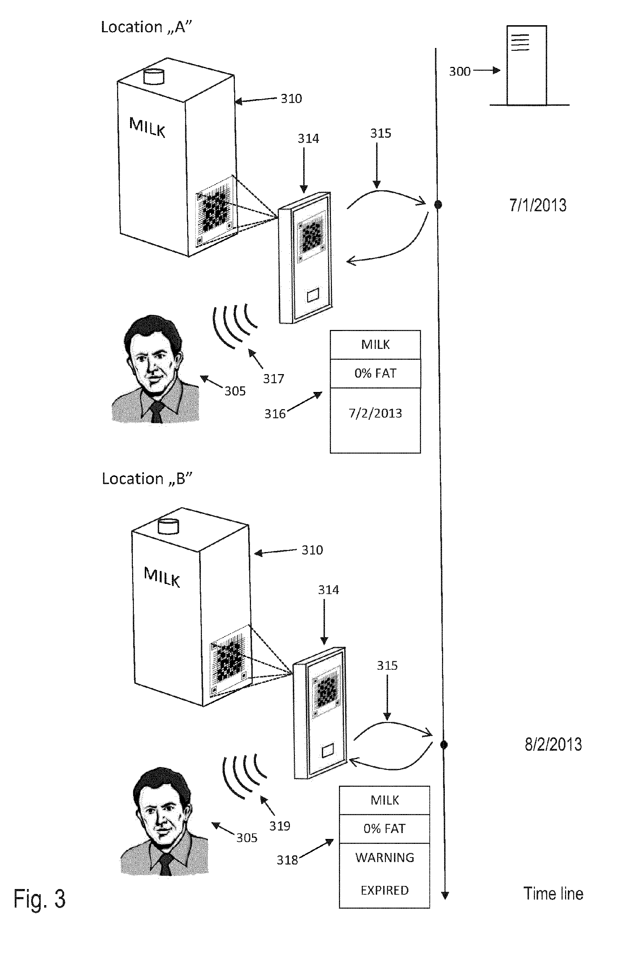

Fig. 3 depicts the third example of invention embodiment, in which a tagged carrier 310 takes the form of a carton of milk. A user 305, who is for example in a shop marked as a localisation A, enters a tag 311 on a portable device 314. It can be any device with a communication function which enables sending the tag to the intermediary centre via the channel 315. In response to tagging which is previously saved on it by e.g. a milk manufacturer, the server of the intermediary centre sends feedback information 316 to the communication device. In this example of embodiment, the feedback information takes the form of a sound ucast containing information about the product. It is particularly important for people with bad eyesight or not speaking a local language, since the feedback information can be adjusted to language preferences or a level of user's disability.

What is more, in the situation presented in fig. 3 the system, according to the invention, adjusts the feedback information to the situation, considering e.g. a moment in time or user's localization, in which tagging 311 is sent to the server 300 of the intermediary centre. The ucast reply 318 is sent to the user 305 (who is in a localization B) later than the reply 316 sent to them when they were in the localization A (earlier). The ucast information 318 is sent in the sound form 319, informing them about exceeded expiratory date in the way adjusted to the user's preferences.

A customer may also use tagging to send a message to a manufacturer e.g. in case of complaints, comments.

## Claims

1. The method for sending personalised messages is characterised that comprises the steps in which
the carrier is tagged
then the personalised message is saved on the server
the personalised message is attributed to the carrier
and then
the personalised message is sent from the server in response to and in accordance with attribution to the tagged carrier.

2. According to claim 1, the method is **characterised in that** the carrier is a postcard or a computer file.

3. According to claim 1, the method is **characterised in that** tagging is a QR code or a unique pair of a login and a password, or an alphanumeric code.

4. According to claim 1, the method is **characterised in that** the personal message is a voice message, an audio record, a video record, an image, text or metadata.

5. The device for sending personalised messages is **characterised in that** it is equipped with means for receiving and saving messages
a module for attributing the tagged carrier to the personalised message
and a module for sending the personalised message from the server in response to and in accordance with attribution of the tagged carrier.

6. The method for sending personalised messages is **characterised in that**
personal messages are sent to the server
personalised message access mode is configured
in response to the enquiry, personalised messages are sent in the access mode.

7. According to claim 6, the method is **characterised in that**, moreover, after sending a personalised message in accordance with the access mode, another personalised message or messages, which are the reply to the initiating message, are saved; then personalised messages saved in the access mode then can be reproduced.

8. According to claim 6, the method is **characterised in that** the personalised message is a voice message, an audio record, a video record, an image, text or metadata.

9. According to claim 6, the method is **characterised in that** the access mode includes an unlimited number of recipients, includes a limited number of recipients, in particular one recipient, a determined message expiry date, a determined number of replies.

10. The device for sending personalised messages is **characterised in that** it is equipped with a module for receiving and sending personalised messages on the server, a module for configuring personalised message access mode and a module for classifying and reproducing replies to personalised messages in the access mode.
